Europäisches Patentamt

European Patent Office

Office européen des brevets

(11) Publication number: **0 178 900**
**B1**

# EUROPEAN PATENT SPECIFICATION

(45) Date of publication of patent specification: 02.11.89

(51) Int. Cl.⁴: **H 04 N 9/64**, H 04 N 3/27

(21) Application number: 85307409.4

(22) Date of filing: 15.10.85

(54) Television receivers.

(30) Priority: 15.10.84 JP 215856/84

(43) Date of publication of application:
23.04.86 Bulletin 86/17

(45) Publication of the grant of the patent:
02.11.89 Bulletin 89/44

(84) Designated Contracting States:
DE FR GB NL

(56) References cited:
FR-A-2 546 697
GB-A-2 140 640

(73) Proprietor: SONY CORPORATION
7-35 Kitashinagawa 6-Chome Shinagawa-ku
Tokyo 141 (JP)

(72) Inventor: Kikuchi, Masafumi c/o Sony
Corporation
Patents Division 6-7-35 Kitashinagawa
Shinagawa-ku Tokyo 141 (JP)
Inventor: Onodera, Toshio c/o Sony
Corporation
Patents Division 6-7-35 Kitashinagawa
Shinagawa-ku Tokyo 141 (JP)
Inventor: Toyama, Sumio c/o Sony Corporation
Patents Division 6-7-35 Kitashinagawa
Shinagawa-ku Tokyo 141 (JP)
Inventor: Sakamoto, Hiroshi c/o Sony
Corporation
Patents Division 6-7-35 Kitashinagawa
Shinagawa-ku Tokyo 141 (JP)

(74) Representative: Cotter, Ivan John et al
D. YOUNG & CO. 10 Staple Inn
London WC1V 7RD (GB)

EP 0 178 900 B1

Courier Press, Leamington Spa, England.

# Description

This invention relates to television receivers.

In, for example, the NTSC televison system, a video signal is used which has a vertical frequency of about 60 Hz and a horizontal line frequency of about 15.75 kHz. it has been proposed to use a scanning converter which improves the quality of a reproduced picture by doubling the number of horizontal lines by means of a calculating operation and so on. If such a scanning converter is used, the video signal derived therefrom has a vertical frequency of around 60 Hz, but has a horizontal frequency of about 31.5kHz.

Some computers of the so-called high resolution display type are designed to produce a video signal having a line frequency of about 24 kHz. Further, a so-called high definition television (HDTV) system is intended to employ a line frequency of about 33.75 kHz.

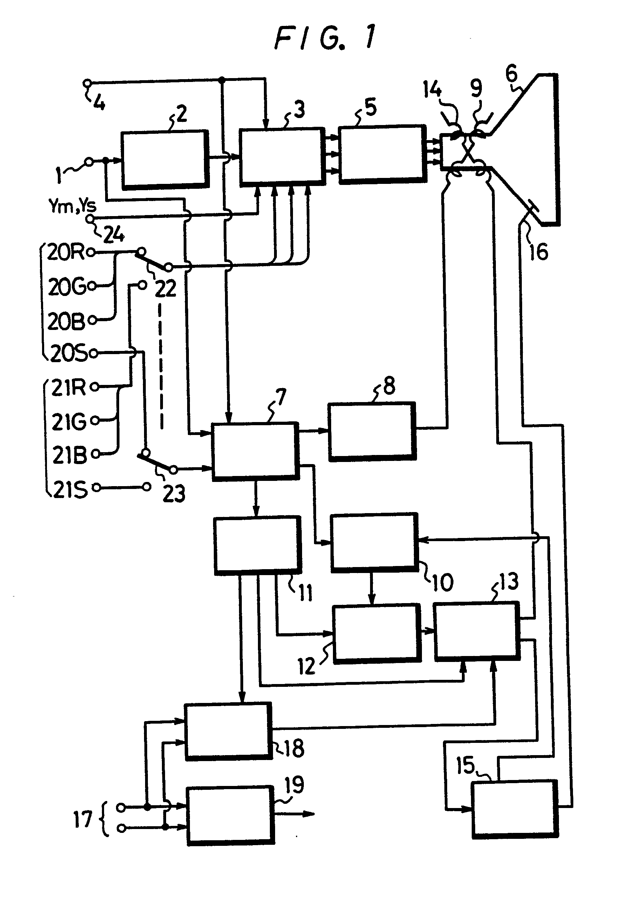

A multiple scanning type television receiver, which is a single receiver that can receive various video sigals having different line frequencies, has been proposed by the present applicants (SONY CORPORATION). This receiver will now be described with reference to Figures 1 to 6 of the accompanying drawings.

Figure 1 is an overall block diagram of the multiple scanning type television receiver. When the receiver is receiving a standard video signal from a tuner for standard televison broadcasting, a video tape recorder, a video disc player, a tuner for satellite broadcasting or some personal computers, etc., a video signal applied to an input terminal 1 is supplied through a video processing circuit 2 to a red/green/blue (RGB) processing circuit 3 whereby three primary colour signals red (R), green (G) and blue (B) are formed. A video/RGB switching signal applied to another input terminal 4 is supplied to the RGB processing circuit 3 so that the video signal or RGB signals are selected and the three primary colour signals are supplied through a video output circuit 5 to a cathode ray tube 6.

The video signal from the input terminal 1 is supplied also to a sync separator circuit 7 in which vertical and horizontal synchronising signals are separated. The switching signal from the input terminal 4 is supplied to the sync separator circuit 7 and the vertical synchronising signal selected thereby from the video signal or RGB signals is supplied to a vertical deflection circit 8. The vertical deflection signal from the vertical deflection circuit 8 is supplied to a vertical deflection yoke 9 of the cathode ray tube 6. The horizontal synchronizing signal derived from the sync separator circuit 7 is supplied to an automatic frequency control (AFC) circuit 10 and to a mode detector circuit 11. A signal from the AFC circuit 10 is supplied to a horizontal oscillator circuit 12 and a normal control signal from the mode detector circuit 11 also is supplied to the horizontal oscillator circuit 12. A signal from the horizontal oscillator circuit 12 is supplied to a horizontal deflection circuit 13 and a horizontal or line deflection signal derived from the horizontal deflection circuit 13 is supplied to a horizontal deflection yoke 14 of the cathode ray tube 6. A signal from the horizontal deflection circuit 13 is supplied to a high voltage generator circuit 15 which includes a flyback transformer (not shown). A high voltage produced in the high voltage generator circuit 15 is supplied to a high voltage terminal 16 of the cathode ray tube 6 and a flyback pulse from the generator circuit 15 is supplied to the AFC circuit 10.

A commercially available or mains electric power source is connected via power supply terminals 17 to a power supply circuit 18 and a normal power supply voltage corresponding to the normal control signal from the mode detector circuit 11 is supplied from the power supply circuit 18 to the horizontal deflection circuit 13. The commercially available or mains power from the power supply terminals 17 is supplied to another power supply circuit 19 and a stabilised power supply voltage therefrom is fed to other utilisation circuits (not shown).

Thus, a standard or normal video signal can be received and reproduced. Further, the previously proposed multiple scanning type television receiver can receive digitial or analog R, G and B primary colour output signals (hereinafter simply RGB signals) from some high grade personal computers, from videotex decoders (for example "CAPTAIN" (Character And Pattern Telephone Access Information Network) decoders), teletext decoders of scanning converters, etc. In this case, digital RGB signals are supplied to input terminals 20R, 20G and 20B or analog RGB signals are supplied to input terminals 21R, 21G and 21B. The digital or analogo signals are selected by a switch 22 and then fed to the RGB processing circuit 3, in which the RGB signals are selected by the video/RGB switching signal from the input terminal 4 and fed to the video output circuit 5.

A digital synchronising signal on an output terminal 20S or an analog synchronising signal on an input terminal 21S is selected by a switch 23 and then fed to the sync separator circuit 7, in which the selected signal is further selected by the switching signal from the input terminal 4 and fed to the vertical deflection circuit 8 and to the AFC circuit 10. The signal from the sync separator circuit 7 is supplied to the mode detector circuit 11 in which a control signal having a voltage value proportional to the detected frequency is formed, and the control signal is supplied to the horizontal oscillator circuit 12, the horizontal deflection circuit 13 and the power supply circuit 18.

Thus, digital or analog RGB signals can be received and reproduced on the cathode ray tube 6. Further, so-called superimposed reception in which the normal video signal and the RGB signals are mixed and then displayed can be carried out. To accomplish this, the switching signal applied to the input terminal 4 is made to be an RGB mode signal. Also, a position control signal Ys for the superimposed picture and an area control signal Ym for the superimposed picture, which are applied to an input terminal 24, are supplied to the RGB processing circuit 3, in which the video signal and the RGB signals are switched selectively by the signals Ys and Ym.

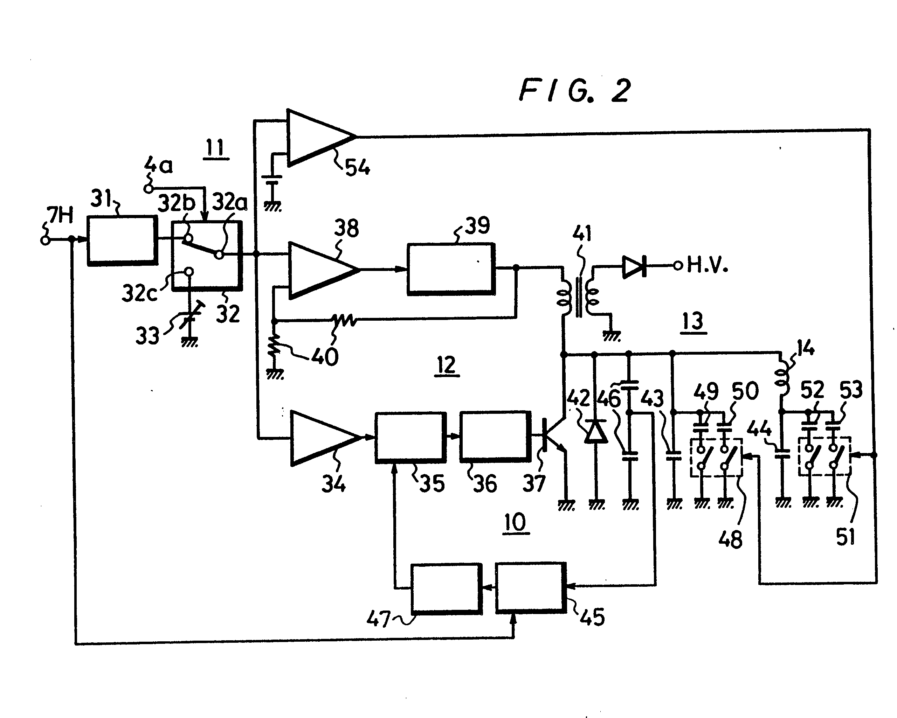

Thus, as described above, various video signals can be received and reproduced. In the television receiver of Figure 1 the horizontal deflection section is formed in practice as follows. Referring to Figure 2, the horizontal synchronizing signal from the sync separator circuit 7 is supplied via a horizontal synchronizing signal input terminal 7H to the mode detector circuit 11, which comprises a frequency-to-voltage converter (FVC) 31, whereby a control voltage proportion to the horizontal frequency is formed. The output voltage from the FVC 31 is supplied to one fixed terminal 32b of a switching circuit 32 and another fixed terminal 32c of the switching circuit 32 is grounded via a reference voltage source 33. The voltage of the reference voltage source 33 is set to be equal to the value of a voltage that the FVC 31 produces when a horizontal synchronising signal having a line frequency of about 15.75 kHz, according to the NTSC system, is supplied to the input terminal of the FVC 31. The switching circuit 32 is supplied at a control terminal thereof with the video/RGB switching signal from the input terminal 4 through an input terminal 4a. When the video/RGB switching signal is a video switching signal, a movable contact arm 32a of the switching circuit 32 is connected to the fixed terminal 32c, while when the video/RGB switching signal is an RGB signal, the movable contact arm 32a of the switching circuit 32 is connected to the other fixed terminal 32b. The voltage obtained at the movable contact arm 32a of the switching circuit 32 is supplied through a buffer amplifier 34 to a voltage controlled oscillator (VCO)35 which forms part of the horizontal oscillator circuit 12. The oscillatory output from the VCO 35 is supplied through a horozontal drive circuit 36 to a switching transistor 37 which forms the horizontal deflection circuit 13.

The voltage obtained at the movable contact arm 32a of the switching circuit 32 is supplied through a control amplifier 38 to, for example, a Y—Z parametric type power supply circuit 39 which forms the power supply circuit 18. An output voltage from the power supply circuit 39 is fed back to the control amplifier 38 via a voltage divider 40, whereby the output voltage is stabilised. The stabilised output voltage is supplied to a primary coil of the flyback transformer 41.

The switching transistor 37 is connected in series with the primary coil of the flyback transformer 41. A damper diode 42, a resonant capacitor 43 and a series circuit formed by the horizontal yoke 14 and an S-shaping capacitor 44 each are connected in parallel with the switching transistor 37.

The horizontal synchronising signal is supplied also to a detector circuit 45, which forms the AFC circuit 10, and a signal from a voltage divider 46 connected in parallel with the switching transistor 37 is supplied to the detector circuit 45 whereby an AFC control signal is obtained therefrom. The AFC control signal is supplied through a low pass filter (LPF) 47 to a control terminal of the VCO 35.

Capacitors 48 and 50 can be connected in parallel with the resonant capacitor 43 via respective switches of a switching circuit 48. Capacitors 52 and 53 can be connected in parallel to the S-shaping capacitor 44 via respective switches of a switching circuit 51. The voltage from the FVC 31 is supplied to a comparator circuit 54 which produces a three-value output signal indicative of whether the frequency of the horizontal synchronising signal belongs to one of three frequency ranges, namely less than 20 kHz, 20 to 30 kHz and greater than 30 kHz. In response to the output signal from the comparator circuit 54, the switching circuit 48 and 51 are controlled such that both of the two switches incorporated therein are turned off or either one or the other of the switches is turned on.

Accordingly, in the horizontal deflection section shown in Figure 2, The VCO 35 produces an oscillatory signal having a frequency that will change in a range of from 15 to 34 kHz in synchronism with the input horizontal synchronising signal, thereby to carry out horizontal deflection, while the power supply circuit 39 generates a voltage that will change in a range of from 58 to 123 volts in proportion to the line frequency, whereby the amplitude of the horizontal deflection signal is made constant ragardless of its frequency. The caapacitors 49, 50 and 52, 53 connected in parallel with the resonant capacitor 43 and the S-shaping capacitor 44 are switched selectively and according to the input horizontal frequency, whereby correction of the characteristic is performed.

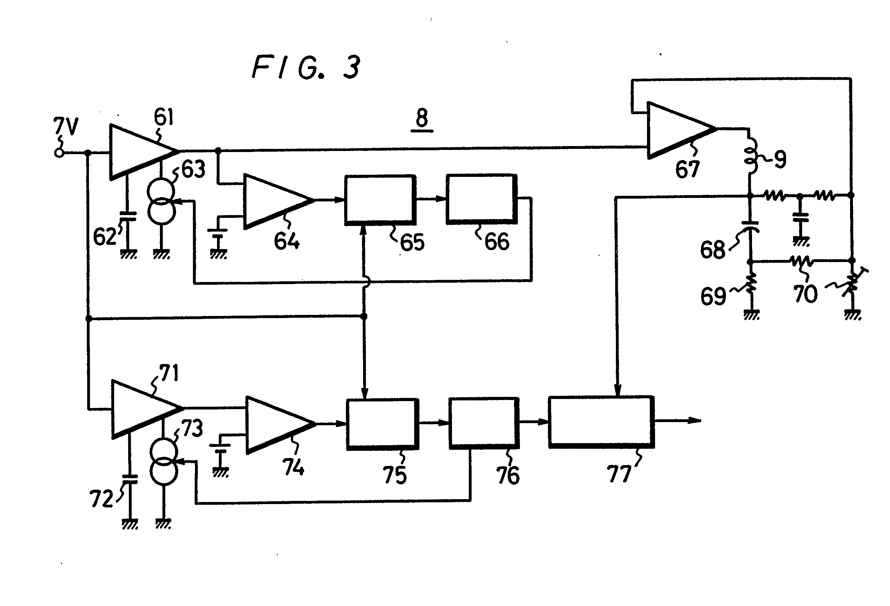

The vertical deflection section of the television receiver shown in Figure 1 is constructed in practice as follows. As shown in Figure 3, the vertical synchronizing signal from the sync separator circuit 7 is supplied through an input terminal 7V to a sawtooth wave oscillator 61, which forms part of the vertical deflection circuit 8, by virtue of which a capacitor 62, for example, is charged and discharged by the current from a current source 63 to form a vertical sawtooth wave. The vertical sawtooth wave is supplied to a comparator circuit 64 which produces a three-value output signal, the values of which indicate a predetermined voltage region, a voltage region lower than the predetemined voltage, and a voltage region higher than the predetermined voltage, respectively. The three-value output signal is supplied to a control terminal of an up/down counter (UDC) 65. The UDC 65 is supplied at a counting terminal thereof with the vertical synchronising signal. A counted value from the UDC 65 is supplied to a digital-to-analog converter (DAC) 66 and the current source 63 is controlled by the converted analog value from the DAC.

As a result, the sawtooth wave generator 61 generates, regardless of the frequency of the vertical synchronising signal, a sawtooth wave of which the height (amplitude) is controlled to fall in a predetermined voltage region. The sawtooth wave is supplied through a vertical output circuit 67 to the vertical deflection yoke 9. A series circuit of a capacitor 68 and a resistor 69 is connected in series with the vertical deflection yoke 9 and a voltage divider 70 is connected in parallel with the resistor 69. The divided output from the voltage divider 70 is fed back to the vertical output circuit 67.

Thus, the amplitude of the vertical deflection signal is made constant regardless of its frequency. If one resistor which forms a part of the voltage divider 70 is made variable, it is possible to control the amplitude of the vertical deflection signal to become of a desired value.

Another set of components (a sawtooth wave oscillator 71 to a DAC 76), formed as a circuit which is the same as the circuit comprising the sawtooth wave oscillator 61 to the DAC 66, is provided. The output value of the DAC 76 in this circuit is supplied to a pincushion correction signal forming circuit 77. A vertical parabolic signal obtained at, for example, the junction between the deflection yoke 9 and the capacitor 68, also is supplied to the pincushion correcting signal forming circuit 77. The circuit 77 forms a pincushion correction signal which is supplied to a pincushion correction circuit (not shown).

In the above-described television receiver, the necessary horizontal and/or vertical deflections are carried out in response to various horizontal and/or vertical frequencies and various video signals having different deflection frequencies can be received and reproduced.

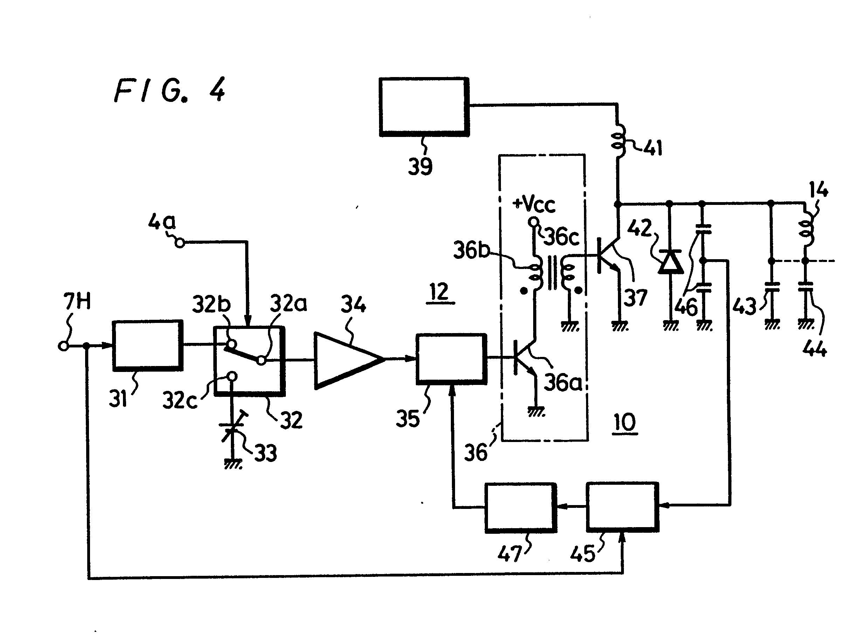

In the horizontal drive circuit 36 of the above-described multiple scanning type television receiver, as is shown in more detail in Figure 4, a horizontal drive transistor 36a is driven by the oscillator signal (hereinafter referred to as the horizontal drive pulse signal) from the VCO 35, a primary winding of a horizontal drive transformer 36b is driven by the horizontal drive transistor 36a, and an output switching transistor, namely the transistor 37 of the horizontal deflection circuit 13, is driven by a secondary side of the horizontal transformer 36b.

The standard or normal television receiver is so designed that the duty cycle of the oscillatory signal from the VCO 35 is selected to be about 50% and the voltage +Vcc obtained at a power supply terminal 36c and the winding ratio of the horizontal drive transformer 36b, etc. are selected to operate the switching transistor 37 at an optimum driving condition.

Belgian Patent No. DE—A—899 745 (which corresponds to US Patent No. US—A—516 169) discloses a synchronised switching power supply regulator for a multiple scanning frequency video monitor. In the arrangement disclosed in BE—A—899 745, a multiple scanning rate horizontal deflection circuit, which can operate at either one of two frequencies as a result of a switching operation, produces scanning current in a horizontal deflection winding. A retrace pulse voltage synchronously related to the scanning current is applied to a pulse conditioning circuit of the switching power supply. The pulse conditioning circuit includes a monostable circuit and generates from the retrace pulse voltage a regulator synchronising pulse signal that is synchronously related to the scanning current and does not change in frequency when the deflection circuit is switched between the two frequencies. The regulator synchronising pulse signal is applied to the power supply, whereby the power supply switches at the unchanging frequency, via a pulse width modulator. One of a plurality of output voltage of the power supply is fed back to the pulse width modulator to vary the width of the output pulses of the pulse width modulator so as to regulate the output voltages of the power supply.

If the duty cycle of the horizontal drive pulse of the VCO 35 is selected to be above 50%, no difficulty arises when the line frequency is fixed at about 15.75 kHz, as in the standard normal television receiver. However, the present inventors have ascertained that some difficulties which can give rise to misoperation may occur in the multiple scanning type television receiver as shown in Figures 1 to 4 which is supplied with a video signal having a horizontal or line frequency which may change to more than double the standard frequency.

An explanation will be given with reference to Figures 4 to 6 of what happens when video signals having line frequencies of 15 kHz and 30 kHz are received and reproduced when the duty cycle of the horizontal drive pulse from the VCO 35 is fixed at 50%.

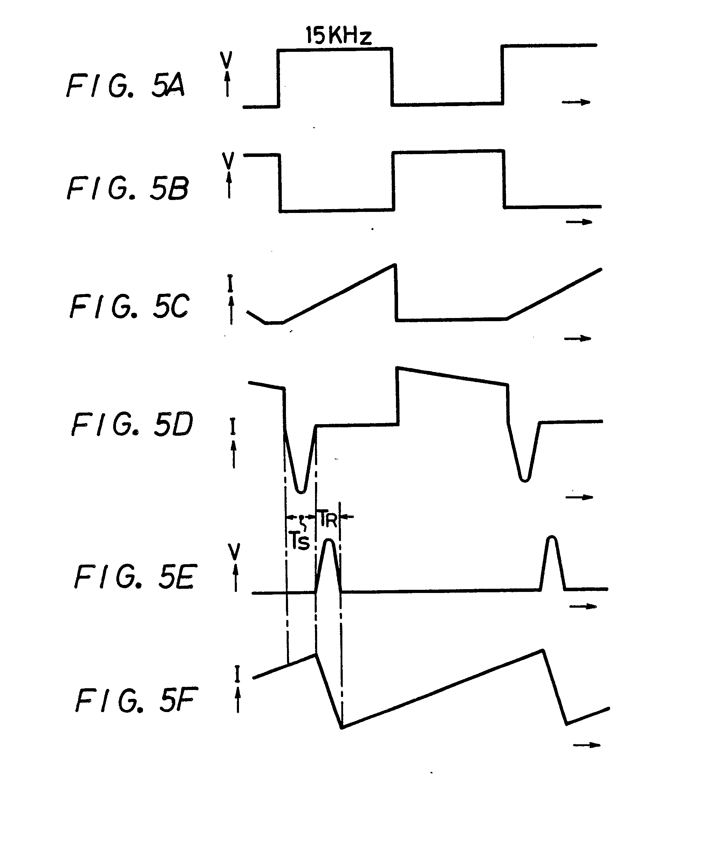

When the line frequency is 15 kHz, a horizontal drive pulse as shown in Figure 5A is supplied from the VCO 35 to the bae of the horizontal drive transistor 36a, whereby the collector voltage and current of the horizontal drive transistor 36a become as shown in Figures 5B and 5C, respectively. The base current of the output switching transistor 37 becomes as shown in Figure 5D and the collector voltage of the output switching transistor 37 becomes as shown in Figure 5E, so that a deflection current such as is shown in Figure 5F flows through the horizontal deflection yoke 14.

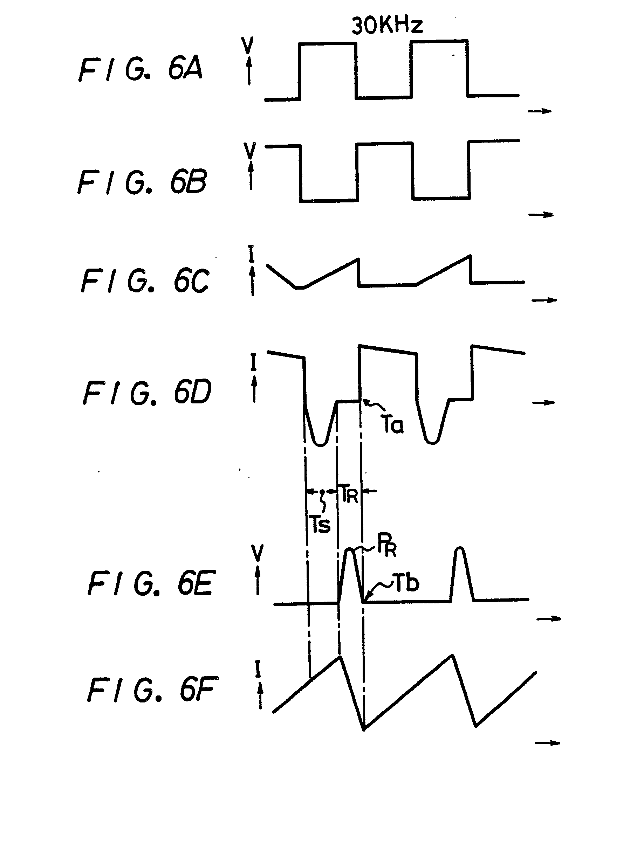

In like manner, when the line frequency is 30 kHz, the voltage and current waveforms shown in Figures 5A to 5F for the case when the line frequency is 15 kKz become as shown in Figures 6A to 6F, respectively. That is, since the peak-to-peak value of the deflection current (shown in Figures 5F and 6F) flowing through the horizontal deflection yoke 14 has to be kept constnt regardless of the change of the horizontal or line frequency, both a storage time $T_S$ of the base current of the output switching transistor 37 and a retrace time $T_R$ of its collector voltage have to be kept constant. (In Figurs 5 and 6, the storage time of the output switching transistor 37 is constant and the storage time of the horizontal drive transistor 36b is zero for simplicity of description). For this reason, there is a chance that when the line frequency becomes relatively high as shown in Figure 6, a point in time Ta (shown in Figure 6D) at which the base current of the output switching transistor 37 begins to flow comes closer to a point in time Tb corresponding to the end of a retrace pulse $P_R$, such as is shown in Figure 6E, and, dependent on the circumstances, base current will flow through the base of the output switching transistor 37.

According to one aspect of the invention there is provided a televison receiver comprising: video signal receiving means for receiving a video signal, a vertical synchronising signal and a horizontal synchronising signal; a signal processing circuit for supplying the video signal to a cathode ray tube; a vertical deflection circuit for supplying a vertical deflection signal to the cathode ray tube in response to the vertical synchronising signal; a horizontal deflection circuit for supplying a horizontal deflection signal to the cathode ray tube in response to the horizontal synchronising signal; frequency detecting means connected to the video signal receiving means for detecting the frequency of the horizontal synchronising signal and deriving a control signal in response thereto; and control means connected between the frequency detecting means and the horizontal deflection circuit for controlling the horizontal deflection circuit in response to said control signal from the frequency detecting means; the horizontal deflection circuit including means for changing a duty cycle of a horizontal drive pulse such that the duty cycle increases when the horizontal frequency becomes higher.

According to a second aspect of the invention there is provided a television receiver comprising; video signal receiving means for receiving a video signal, a vertical synchronising signal and a horizontal synchronising signal; a signal processing circuit for supplying the video signal to a cathode ray tube; a vertical deflection circuit for supplying a vertical deflection signal to the cathode ray tube in response to the vertical synchronising signal; a horizontal deflection circuit for supplying a horizontal deflection signal to the cathode ray tube in response to the horizontal synchronising signal, the horizontal deflection circuit including an oscillator operable in synchronism with the horizontal synchronising signal and an output switching device coupled to the oscillator via a drive stage; power supply means for supplying an operational voltage to the output switching device; frequency detecting means connected to the video signal receiving means for detecting the frequency of the horizontal synchronising signal and deriving a control signal in response thereto; and control means for supplying said control signal to the power supply means for increasing said operational voltage when the horizontal frequency becomes higher; the horizontal deflection circuit including means for changing a duty cycle of a horizontal drive pulse from the drive stage such that the duty cycle increases when the horizontal frequency becomes higher.

According to a third aspect of the present invention there is provded a multiple scanning type television receiver in which a horizontal or line frequency of an input video signal is detected and converted to a control voltage, the control voltage is applied to a horizontal deflection circuit to switch the line frequency of the horizontal deflection circuit whereby input video signals having different line frequencies are received and reproduced, and the duty cycle of a horizontal drive pulse for the horizontal deflection circuit is changed in response to the line frequency of the input video signals.

Preferred embodiments of the invention described hereinbelow provide a multiple scanning type television receiver having a horizontal deflection circuit which can operate properly for input horizontal or line frequencies of a relatively wide range. The preferred multiple scanning type television receivers can, in addition to receiving standard television broadcasts, receive and reproduce video signals having different line frequencies produced from a scanning converter for doubling the line frequencies and so on.

According to the circuit arrangement of the preferred embodiments, the duty cycle of the horizontal drive pulse is designed to be varied in response to the input line or horizontal frequency such that the duration of the time period in which a horizontal drive transistor is turned on by the horizontal drive pulse may become longer than the sum of a storage time and a retrace time. Thus, it is possible to avoid difficulties due to misoperation in which a base current flows through the base of a switching transistor during the retrace time period.

The invention will now be further described, by way of illustrative and non-limiting example, with reference to the accompanying drawings, in which like references designate like elements and parts throughout, and in which:

Figure 1 is a block diagram of a previously proposed multiple scanning type television receiver;

Figures 2 and 4 are circuit diagrams of a horizontal deflection stage of the receiver of Figure 1;

Figure 3 is a circuit diagram of a vertical deflection stage of the receiver of Figure 1;

Figures 5 and 6 are waveform diagrams used for explaining the operation of the receiver of Figure 1;

Figure 7 is circuit diagram of a portion of one embodiment of the present invention;

Figures 8 to 10 are waveform, diagrams used for explaining the operation of the embodiment of Figure 7;

Figure 11 is a circuit diagram of another embodiment of the present invention; and

Figure 12 is a waveform diagram used for explaining the operation of the embodiment of Figure 11.

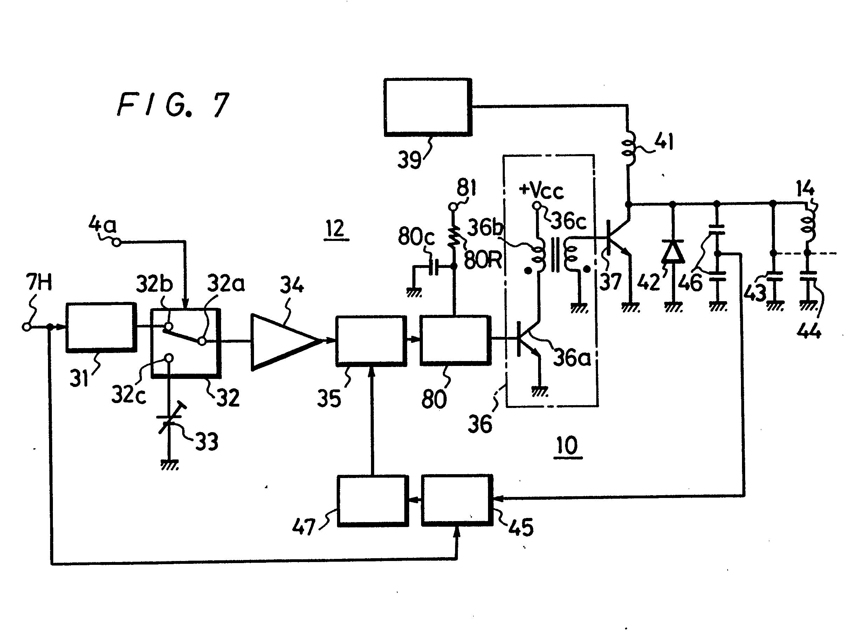

An embodiment of a multiple scanning type television receiver according to this invention will now be described with reference to Figures 7 to 10. Throughout Figures 7 to 10, items corresponding to like items shown in Figures 1 to 6 are designated by the same references and will not be described in detail.

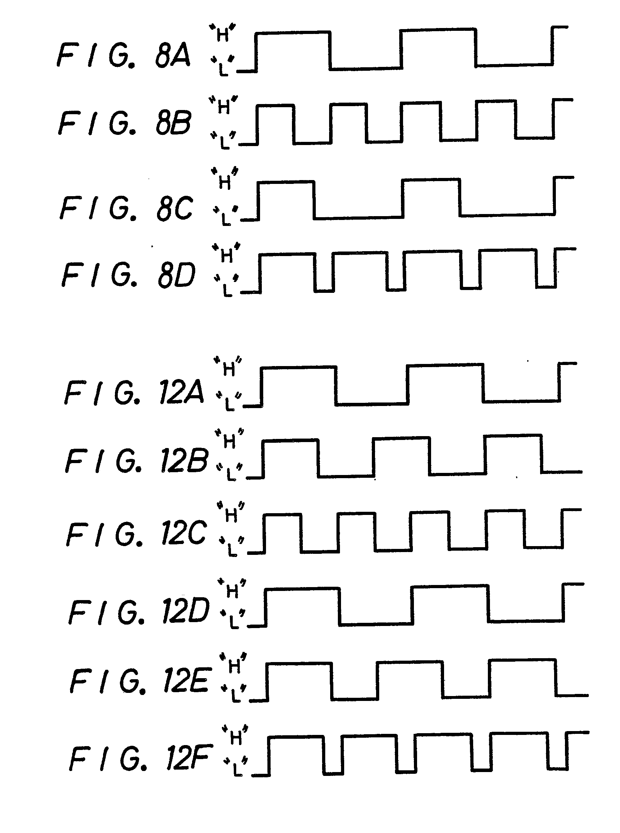

In this embodiment, as shown in Figure 7, the horizontal drive pulse from the VCO 35 is supplied to a monostable multivibrator 80 and the output pulse from the monostable multivibrator 80 is supplied to the base of the horizontal drive transistor 36a (NPN type; of the drive circuit 36. The emitter of the horizontal drive transistor 36a is grounded and the collector thereof is connected to the power supply terminal 36c via the primary winding of the horizontal drive transformer 36b. One end of the secondary winding of the horizontal drive transformer 36b is grounded and the other end therof is connected to the base of the switching transistor 37 (NPN type). A resistor 80R and a capacitor 80C determine the time constant of the monostable multivibrator 80. The resistor 80R and the capacitor 80C are used so that when input pulses having frequencies of, for example, 15 kHz and 30 kHz, as shown in Figures 8A and 8B, are supplied, the monostable multivibrator 80 produce pulses having positive polarity periods which are made constant and which have different duty cycles, as shown in Figures 8C and 8D, respectively. The positive polarity periods of the output pulses of Figures 8C and 8D are designed to exceed the sum of the storage time $T_S$ and the retrace time $T_R$ by a predetermined time period. Positive $d\,c$ power is supplied to a terminal 81. The other circuit elements of Figure 7 are formed similarly to those of the multiple scanning type television receiver shown in Figures 1 to 3.

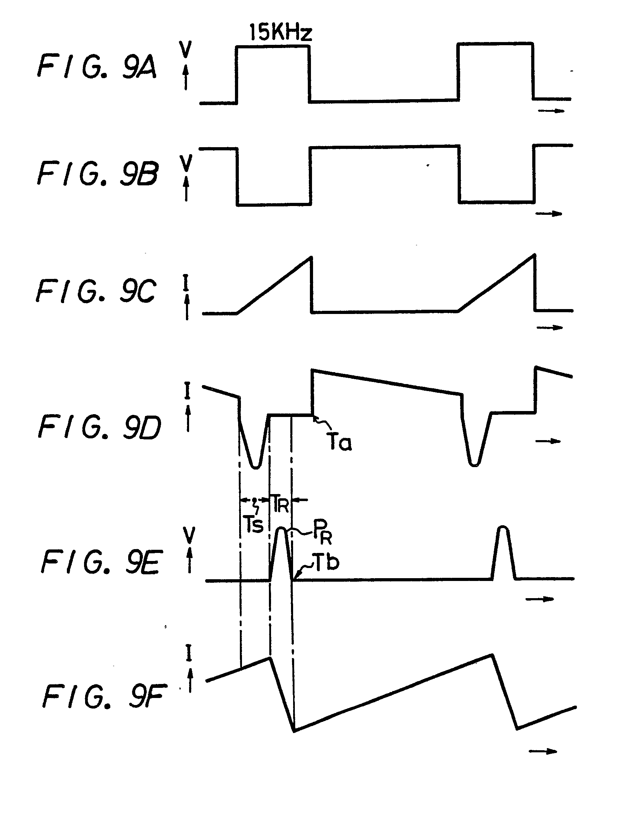

According to the circuit arrangement of Figure 7, when the input video signal has a line frequency of, for example, 15 kHz, the horizontal drive pulse is supplied from the VCO 35 to the monostable multivibrator 80, and the monostable multivibrator 80 supplies a new horizontal drive pulse (as shown in Figure 9A) to the base of the horizontal drive transistor 36a. The collector voltage and current of the horizontal 36a become as shown in Figures 9B and 9C, respectively. Further, the base current of the switching transistor 37 becomes as sown in Figure 9D, while the collector voltage of the switching transistor 37 becomes as shown in Figure 9E. As a result, a deflection current having a waveform as shown in Figure 9F flows through the horizontal deflection yoke 14 so that the horizontal deflection is carried out in accordance with the line frequency (15 kHz) of the input video signal. At that time, since the duration of the positive polarity period of the new horizontal drive pulse from the monostable multivibrator 80 exceeds the sum of the storage time $T_S$ and the retrace time $T_R$ by the predetermined time period, the point in time Ta at which the base current of the switching transistor 37 beings to flow occurs after the point in time Tb at which the end of the retrace pulse $P_R$ occurs so that base current can be prevented from flowing through the base of the switching transistor 37 during the retrace time period $T_R$.

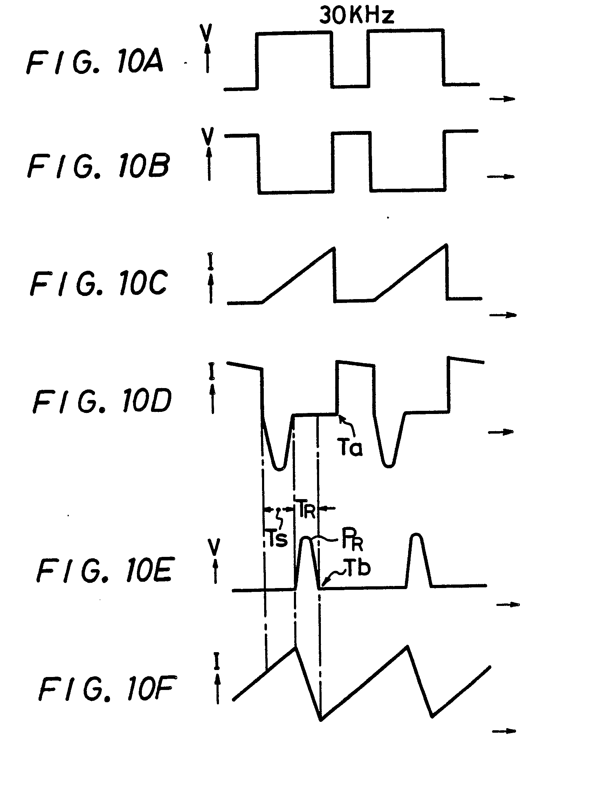

When the line frequency of the input video signal is, for example, 30 kHz, the horizontal drive pulse is supplied from the VCO 35 to the monostable multivibrator 80 in a manner similar to that described above. The mnostable multivibrator 80 supplies a new horizontal drive pulse (Figure 10A), having a duty cycle different from that provided when the line frequency is 15 kHz, to the base of the horizontal drive transistor 36a so that the collector voltage and current of the horizontal drive transistor 36a become as shown in Figures 10B and 10C, respectively. the base current of the switching transistor 37 becomes as shown in Figure 10D, while the collector voltage of the switching transistor 37 has a waveform as shown in Figure 10E. As a result, a deflection current having a waveform as shown in Figure 10F flows through the horizontal deflection yoke 14 to allow the horizontal deflection to be carried out in response to the line frequency of 30 kHz. Since the duration of the positive polarity period of the new horizontal drive pulse from the monostable multivibrator 80 is longer than the duration of the sum of the storage time $T_S$ and the retrace time $T_R$ by the predetermined time period, in similar manner to the case of the input video signal having the line frequency of 15 kHz, the point in time Ta at which the base current of the switching transistor 37 begins to flow occurs after the point in time Tb at which the end of the retrace pulse $P_R$ occurs so that base current can be prevented from flowing through the base of the switching transistor 37 during the retrace time period $T_R$.

Thus, according to this embodiment, in a multiple scanning type televison receiver in which the line frequency of the input video signal is detached and then converted to a control voltage, this voltage is applied to the horizontal deflection circuit 13, and the line frequency of the horizontal deflection circuit 13 is switched, whereby input video signals with different time frequencies can be received and reproduced, the duty cycle of the horizontal drive pulse from the horizontal deflection circuit 13 is changed in response to the line frequency of the input video signal. That is, the duty cycle of the horizontal drive pulse is varied in response to the horizontal frequency so that the time period of the horizontal drive pulse in which the horizontal drive transistor 36a is turned on becomes longer than the duration of the sum of the storage time $T_S$ and the retrace time $T_R$. Thus, the television receiver has the advantage that it is capable of preventing misoperation occurring due to base current flowing through the base of the switching transistor 37 during the retrace time period $T_R$. Further, since the switching transitor 37 can be driven at an optimum condition over a relatively wide range of horizontal frequencies, the heat loss can be reduced by a relatively large amount, the television receiver can be produced at low manufacturing cost, and freedom of design can be increased.

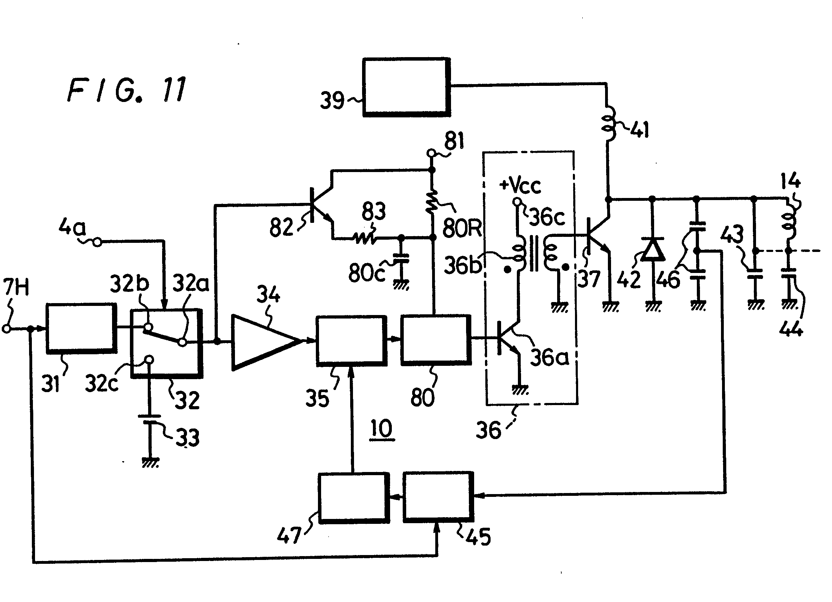

Figures 11 and 12 show another embodiment of multiple scanning type televison receiver according to the present invention. In Figures 11 and 12, items corresponding to like items of Figures 7 to 10 are designated by the same references and will not be described in detail.

In this embodiment, as shown in Figure 11, a series circuit formed of a transistor 82 and a resistor 83 is connected in parallel with the resistor 80R which determines the time constant of the monostable multivibrator 80, and the transistor 82 is controlled by the output voltage from the FVC 31, whereby the duty cycle and the positive period of the new horizontal drive pulse from the monostable multivibrator 80 are varied in proportion to and in inverse proportion to the horizontal or line frequency, respectively. In other words, the ouput voltage from the FVC 31 is supplied to the base of the NPN-type transistor 82, the power source terminal 81 is connected to the collector of the transistor 82 and the emitter of the transistor 82 is connected through the resistor 83 to the junction between the resistor 80R and the capacitor 80C. In a manner similar to the embodiment of Figure 7, the positive period of the new horizontal drive pulse is selected to be longer than the duration of the sum of the storage time $T_S$ and the retrace time $T_R$ by the predetermined time period.

According to the circuit arrangement of Figure 11, when horizontal drive pulses as shown in Figures 12A, 12B' and 12C are supplied from the FVC 35, the transistor 82 is controlled by the output voltage from the FVC 31 whereby new horizontal drive pulses shown in Figures 12D, 12E and 12F, respectively, of which the positive periods and the duty cycles are varied in response to the horizontal or line frequencies, are supplied by the monostable multivibrator 80, the time constant of which is changed in response to the line frequency to the horizontal drive transistor 36a, to drive the horizontal drive transistor 36a. The switching transistor 37 is driven by the horizontal drive transistor 36a through the horizontal drive transformer 36b in a manner similar to the embodiment of Figure 7.

Since, in the embodiment of Figure 11, as the line or horizontal frequency increases, the positive period of the new horizontal drive pulse supplied by the monostable multivibrator 80 to the horizontal drive transistor 36a is decreased while the duty cycle of the horizontal drive pulse is increased, then even if the horizontal frequency is relatively high the ratio between the charge and discharge of the energy of the horizontal drive transformer 36b during the on and off periods of the horizontal drive transistor 36a can fall in a predetermined range. As a result, when the ratio between the charge and discharge of the energy is extraordinarily one-sided and the line frequency is very low, it is possible to prevent the base current of the switching transistor 37 from being reduced too much or, when the horizontal frequency is very high, the possibility of the base current of the switching transistor 37 being increased excessively, so that heat is generated and the heat loss thus is increased, can be prevented.

According to the embodiment of Figure 11, it is possible to achieve the same action and effects as in the case of the embodiment of Figures 7 to 10. Further, the embodiment of Figure 11 has an advantage that the switching transistor 37 can be operated in an optimum condition over a wide range of horizontal frequencies.

According to the above-described multiple scanning type television receivers embodying the present invention, since the duty cycle of the horizontal drive pulse is varied in response to the line or horizontal frequency so that the time period in which the horizontal drive transistor is turned on by the horizontal drive pulse becomes longer than the duration of the sum of the storage time $T_S$ and the retrace time $T_R$, it is possible to prevent difficulties arising from misoperation in which base current flows through the base of the switching transistor during the retrace time period $T_R$. Further, since the switching transistor can be driven under an optimum driving condition over a wide range of horizontal frequencies, there are advantages that the heat loss can be reduced relatively, the television receiver can be produced at lower cost, and freedom in designing the television receiver can be increased.

## Claims

1. A television receiver comprising: video signal receiving means (1, 20, 21) for receiving a video signal, a vertical synchronising signal and a horizontal synchronising signal; a signal processing circuit (2, 3) for supplying the video signal to a cathode ray tube (6); a vertical deflection circuit (8) for supplying a vertical deflection signal to the cathode ray tube (6) in response to the vertical synchronising signal; a horizontal deflection circuit for supplying a horizontal deflection signal to the cathode ray tube (6) in response to the horizontal synchronising signal; frequency detecting means (11, 31) connected to the video signal receiving means (1, 20, 21) for detecting the frequency of the horizontal synchronising signal and deriving a control signal in response thereto; and control means (12) connected between the frequency detecting means (11, 31) and the horizontal deflection circuit for controlling the horizontal deflection circuit in response to said control signal from the frequency detecting means (11, 31); the horizontal deflection circuit including means (80) for changing a duty cycle of a horizontal drive pulse such that the duty cycle increases when the horizontal frequency becomes higher.

2. A television receiver according to claim 1, wherein the means for changing the duty cycle of the horizontal drive pulse includes a monostable multivibrator (80) having a predetermined time constant.

3. A television receiver according to claim 2, wherein the predetermined time constant is variable in response to said control signal such that the time constant becomes shorter when the horizontal frequency becomes higher.

4. A television receiver according to claim 1, claim 2 or claim 3, wherein the video signal receiving means (1, 20, 21) is capable of selectively receiving standard and non-standard video signals.

5. A television receiver according to claim 4, wherein the frequency detecting means (11, 31) includes a switchable means (32, 33) for providing a predetermined constant voltage as said control signal when the video signal receiving means (1, 20, 21) receives the standard video signal.

6. A television receiver according to claim 4 or claim 5, wherein the video signal receiving means (1, 20, 21) includes a first input terminal (1) for receiving the standard video signal and a second input terminal (20, 21) for receiving the non-standard video signal.

7. A television receiver according to claim 4, claim 5 or claim 6, which is capable of selectively receiving a standard video signal that is in a form of a composite video signal and a non-standard video signal that is in a form of red, green and blue video signals.

8. A television receiver comprising: video signal receiving means (1, 20, 21) for receiving a video signal, a vertical synchronising signal and a horizontal synchronising signal; a signal processing circuit (2, 3) for supplying the video signal to a cathode ray tube (6); a vertical deflection circuit (8) for supplying a vertical deflection signal to the cathode ray tube (6) in response to the vertical synchronising signal; a horizontal deflection circuit for supplying a horizontal deflection signal to the cathode ray tube (6) in response to the horizontal synchronising signal, the horizontal deflection circuit including an oscillator (35) operable in synchronism with the horizontal synchronising signal and an output switching device (37); coupled to the oscillator (35) via a drive stage (36); power supply means (18, 39) for supplying an operational voltage to the output switching device (37); frequency detecting means (11, 31) connected to the video signal receiving means (1, 20, 21) for detecting the frequency of the horizontal synchronising signal and deriving a control signal in response thereto; and control means (38) for supplying said control signal to the power supply means (18, 39) for increasing said operational voltage when the horizontal frequency becomes higher; the horizontal deflection circuit including means (80) for changing a duty cycle of a horizontal drive pulse from the drive stage (36) such that the duty cycle increases when the horizontal frequency becomes higher.

9. A television receiver according to claim 8, wherein the means for changing the duty cycle includes a monostable multivibrator (80) which forms a part of the drive stage (36) and has a predetermined time constant.

10. A television receiver according to claim 9, wherein said predetermined time constant is changeable in response to said control voltage such that the time constant becomes shorter when the horizontal frequency becomes higher.

## Patentansprüche

1. Fernsehempfänger mit einer Videosignal-Empfangseinrichtung (1, 20, 21) für den Empfang eines Videosignals, eines Vertikalsynchronisiersignals und eines Zeilensynchronisiersignals, mit einer Signalverarbeitungsschaltung (2, 3), die das Videosignal an eine Kathodenstrahlröhre (6) liefert, mit einer Vertikalablenkschaltung (8), die in Abhängigkeit von dem Vertikalsynchronisiersignal ein Vertikalablenksignal an die Kathodenstrahlröhre (6) liefert, mit einer Zeilenablenkschaltung, die in Abhängigkeit vom dem Zeilensynchronisiersignal ein Zeilenablenksignal an die Kathodenstrahlröhre (6) lierfert, mit einer mit der Videosignal-Empfangseinrichtung (1, 20, 21) verbundenen Frequenzdetektoreinrichtung (11, 31) zur Erfassung der Frequenz des Zeilensynchronisiersignals und zur Ableitung eines Steuersignals in Abhängigkeit hiervon sowie mit einer zwischen der Frequenzdetektoreinrichtung (11, 31) und der Zeilenablenkschaltung angeordneten Steuereinrichtung (12) zur Steuerung der Zeilenablenkschaltung in Abhängigkeit von dem Steuersignal der Frequenzdetektoreinrichtung (11, 31), wobei die Zeilenablenkschaltung Mittel (80) zur Änderung des Impuls-Pausen-Verhältnisses eines Zeilen-Treiberimpulses aufweist, die bewirken, daß dieses Impuls-Pausen-Verhältnis anwächst, wenn die Zeilenfrequenz größer wird.

2. Fernsehempfänger nach Anspruch 2, bei dem die Mittel zur Änderung des Impuls-Pausen-Verhältnisses des Zeilen-Treiberimpulses einen monostabilen Multivibrator (80) mit einer vorbestimmten Zeitkonstante enthalten.

3. Fernsehempfänger nach Anspruch 2, bei dem die vorbestimmte Zeitkonstante in Abhängigkeit von dem Steuersiganl so veränderbar ist, daß sie kleiner wird, wenn die Zeilenfrequenz größer wird.

4. Fernsehempfänger nach Anspruch 1, 2 oder 3, bei dem die Videosignal-Empfangseinrichtung (1, 20, 21) für den wahlweisen Empfang von standardisierten oder nichtstandardisierten Videosignalen eingerichtet ist.

5. Fernsehempfänger nach Anspruch 4, bei dem die Frequenzdetektoreinrichtung (11, 31) eine umschaltbare Einrichtung (32, 33) enthält, die als Steuersignal eine vorbestimmte konstante Spannung lierfert, wenn die Video signal-Empfangs einrichtung (1, 20, 21) das standardisierte Videosignal empfängt.

6. Fernsehempfänger nach Anspruch 4 oder 5, bei dem die Videosignal-Empfangseinrichtung (1, 20, 21) einen ersten Eingang (1) für den Empfang des standardisierten Videosignals und einen zweiten Eingang (20, 21) für den Empfang des nichtstandardisierten Videosignals besitzt.

7. Fernsehempfänger nach Anspruch 4, 5 oder 6, der für den wahlweisen Empfang eines in Form eines Videosignalgemischs vorliegenden standardisierten Videosignals oder eines in Form von Rot-, Grün- und Blau-videosignalen vorliegenden nichtstandardisierten Videosignals ausgebidlet.

8. Fernsehmempfänger mit einer Videosignal-Empfangseinrichtung (1, 20, 21) für den Empfang eines Videosignals, eines Vertikalsynchronisiersignals und eines Zeilensynchronisiersignals, mit einer Signalverarbeitungsschaltung (2, 3), die das Videosiganl an eine Kathoden strahlröhre (6) liefert, mit einer Vertikalablenkschaltung (8), die in Abhängigkeit von dem Vertikalsynchronisiersignal ein Vertikalablenksignal an die Kathodenstrahlröhre (6) liefert, mit einer Zeilenablenkschaltung, die in Abhängigkeit von dem Zeilensynchronisiersignal ein Zeilenablenksignal an die Kathodenstrahlröhre (6) liefert, wobei die Zeilenablenkschaltung einen synchron mit dem Zeilensynchronisiersignal arbeitenden Oszillator (35) sowie eine Ausgangssignal-Schalteinrichtung (37) aufweist, mit einer über eine Treiberstufe (36) mit dem Oszillator (35) gekoppelten Stromversorgungseinrichtung (18, 39) zur Lieferung einer Betätigungsspannung an die Ausgangssignal-Schalteinrichtung (37), mit einer mit der Videosignal-Empfangseinrichtung (1, 20, 21) verbundenen Frequenzdetoktoreinrichtung (11, 31) zur Erfassung der Frequenz des Zeilensynchronisiersignals und zur Ableitung eines Steuersignals in Abhängigkeit hiervon sowie mit einer Steuereinrichtung (38) zur Zuführung des Steuersignals an die Stromversorgungseinrichtung (18, 39), um die Betätigungsspannung zur vergrößern, wenn die Zeilenfrequenz größer wird, wobei die Zeilenablenkschaltung Mittel (80) zur Änderung des Impuls-Pausen-Verhältnisses eines Zeilen-Treiberimpulses aufweist, die bewirken, daß dieses Impuls-Pausen-Verhältnis anwächst, wenn die Zeilenfrequenz größer wird.

9. Fernsehempfänger nach Anspruch 8, bei dem die Mittel zur Änderung des Impuls-Pausen-Verhältnisses einen monostabilen Multivibrator (80) enthalten, der Teil der Treiberstufe (36) ist und eine vorbestimmt Zeitkonstante hat.

10. Fernsehempfänger nach Anspruch 9, bei dem die vorbestimmte Zeitkonstante in Abhängigkeit von dem Steuersignal so veränderbar ist, daß die kleiner wird, wenn die Zeilenfrequenz größer wird.

**Revendications**

1. Un récepteur de télévision comprenant: des moyens de réception de signal vidéo (1, 20, 21) destinés à recevoir un signal vidéo, un signal de synchronisation verticale et un signal de synchronisation horizontale; un circuit de traitement de signal (2, 3) destiné à appliquer le signal vidéo à un tube cathodique (6); un circuit de déflexion verticale (8) destiné à appliquer un signal de déflexion verticale au tube cathodique (6), sous la dépendance du signal de synchronisation verticale; un circuit de déflexion horizontale destiné à appliquer un signal de déflexion horizontale au tube cathodique (6) sous la dépendance du signal de synchronisation horizontale; des moyens de détection de fréquence (11, 31) connectés aux moyens de réception de signal vidéo (1, 20, 21), pour détecteur la fréquence du signal de synchronisation horizontale et pour élaborer un signal de commande correspondant; et des moyens de commande (12) connectés entre les moyens de détection de fréquence (11, 31) et le circuit de déflexion horizontale, pour commander le circuit de déflexion horizontale sous la dépendance du signal de commande qui provient des moyens de détection de fréquence (11, 31); le circuit de déflexion horizontale comprenant des moyens (80) destiné à changer le rapport cyclique d'impulsions d'attaque de déflexion horizontale, de façon que le rapport cyclique augmente lorsque la fréquence horizontale devient plus élevée.

2. Un récepteur de télévision selon la revendication 1, dans lequel les moyens destinés à changer le rapport cyclique des impulsions d'attaque de déflexion horizontale comprennent un multivibrateur monostable (80) ayant une constante de temps prédéterminée.

3. Un récepteur de télévision selon la revendication 2, dans lequel la constante de temps prédéterminée est variable sous la dépendance du signal de commande, de façon que cette constante de temps devienne plus courte lorsque la fréquence horizontale devient plus élevée.

4. Un récepteur de télévision selon la revendication 1, la revendication 2 ou la revendication 3, dans lequel les moyens de réception de signal vidéo (1, 20, 21) sont capables de recevoir sélectivement des signaux vidéo de type standard et de type non standard.

5. Un récepteur de télévision selon la revendication 4, dans lequel les moyens de détection de fréquence (11, 31) comprennent des moyens commutables (32, 33) qui sont destinés à fournir une tension constante prédéterminée pour le signal de commande, lorsque les moyens de réception de signal vidéo (1, 20, 21) reçoivent le signal vidéo de type standard.

6. Un récepteur de télévision selon la revendication 4 ou la revendication 5, dans lequel les moyens de réception de signal vidéo (1, 20, 21) comprennent une première borne d'entrée (1) qui est destinée à recevoir le signal vidéo de type standard et une seconde borne d'entrée (20, 21) qui est destinée à recevoir le signal vidéo de type non standard.

7. Un récepteur de télévision selon la revendication 4, la revendication 5 ou la revendication 6, qui est capable de recevoir sélectivement un signal vidéo de type standard qui est sous la forme d'un signal vidéo composite et un signal vidéo de type non standard qui est sous la forme de signaux vidéo rouge, vert et bleu.

8. Un récepteur de télévision comprenant: des moyens de réception de signal vidéo (1, 20, 21) destinés à recevoir un signal vidéo, un signal de synchronisation verticale et un signal de synchronisation horizontale; un circuit de traitement de signal (2, 3) destiné à appliquer le signal vidéo à un tube cathodique (6); un circuit de déflexion verticale (8) destiné à appliquer un signal de déflexion verticale au tube cathodique (6), sous la dépendance du signal de synchronisation verticale; un circuit de déflexion horizontale destiné à appliquer un signal de déflexion horizontale au tube cathodique (6) sous la dépendance du signal de synchronisation horizontale, le circuit de déflexion horizontale comprenant un oscillateur (35) capable de fonctionner en synchronisme avec le signal de synchronisation horizontale, et un dispositif de commutation de sortie (37) qui est connecté à l'oscillateur (35) par l'intermédiaire d'un étage d'attaque (36); des moyens d'alimentation (18, 39) destinés à appliquer une tension d'alimentation au dispositif de commutation de sortie (37); des moyens de détection de fréquence (11, 31) qui sont connectés aux moyens de réception de signal vidéo (1, 20, 21) pour détecter la fréquence du signal de synchronisation horizontale et pour élaborer un signal de commande correspondant; et des moyens de commande (38) destinés à appliquer le signal de commande aux moyens d'alimentation (18, 39) pour augmenter la tension d'alimentation lorsque fréquence horizontale devient plus élevée; le circuit de déflexion horizontale comprenant des moyens (80) destinés à changer le rapport cyclique d'impulsions d'attaque de déflexion horizontale qui proviennent de l'étage d'attaque (36), de façon que le rapport cyclique augmente lorsque la fréquence horizontale devient plus élévée.

9. Un récepteur de télévision selon la revendication 8, dans lequel les moyens destinés à changer le rapport cyclique comprennent un multi-vibrateur monostable (80) qui fait partie de l'étage d'attaque (36) et qui a une constante de temps prédéterminée.

10. Un récepteur de télévision selon la revendication 9, dans lequel la constante de temps prédéteminée peut varier sous la dépendance de la tension de commande, de façon que la constante de temps devienne plus coute lorsque la fréquence horizontale devient plus élevée.

EP 0 178 900 B1

F I G. 1

F I G. 2

FIG. 3

EP 0 178 900 B1

FIG. 4

FIG. 5A

FIG. 5B

FIG. 5C

FIG. 5D

FIG. 5E

FIG. 5F

15 KHz

FIG. 6A

30KHz

FIG. 6B

FIG. 6C

FIG. 6D

Ta

Ts

TR

FIG. 6E

PR

Tb

FIG. 6F

6

FIG. 7

EP 0 178 900 B1

FIG. 8A

FIG. 8B

FIG. 8C

FIG. 8D

FIG. 12A

FIG. 12B

FIG. 12C

FIG. 12D

FIG. 12E

FIG. 12F

FIG. 9A

15KHz

FIG. 9B

FIG. 9C

FIG. 9D

Ta

Ts   TR

PR

FIG. 9E

Tb

FIG. 9F

FIG. 10A

FIG. 10B

FIG. 10C

FIG. 10D

FIG. 10E

FIG. 10F

FIG. 11